# EUROPÄISCHE PATENTSCHRIFT

(11) **EP 3 533 641 B1**
(45) Veröffentlichungstag und Bekanntmachung des Hinweises auf die Patenterteilung: **30.03.2022**
(21) Anmeldenummer: 19156454.1
(22) Anmeldetag: 11.02.2019
(51) Int. Cl.: B60C 23/04, B60C 23/06

(54) **VERFAHREN ZUM ZUORDNEN VON REIFENDRUCKÜBERWACHUNGSEINHEITEN ZU RADPOSITIONEN DES FAHRZEUGS SOWIE REIFENDRUCKÜBERWACHUNGSSYSTEM**
METHOD FOR LOCATING POSITION OF WHEELS IN MOTOR VEHICLE IN A TIRE PRESSURE MONITORING SYSTEM, AND DEVICE
MÉTHODE D'ALLOCATION DE POSITIONS DE ROUE D'UN VÉHICULE AU SEIN D'UN SYSTÈME DE SURVEILLANCE DE PRESSIONS DE PNEUMATIQUES, ET DISPOSITIF

(30) Priorität: 01.03.2018 DE 102018104673
(43) Veröffentlichungstag der Anmeldung: 04.09.2019
(73) Patentinhaber: Huf Baolong Electronics Bretten GmbH, 75015 Bretten (DE)
(72) Erfinder: Alexander, Markus, 76287 Rheinstetten (DE)
(74) Vertreter: Twelmeier Mommer & Partner

(56) Entgegenhaltungen:
- DE-A1-102013 220 873
- DE-T2- 69 322 394
- FR-A1- 2 921 588

## Beschreibung

Die Erfindung betrifft ein Verfahren zum Zuordnen von an Rädern eines Fahrzeugs montierten Reifendrucküberwachungseinheiten zu Radpositionen des Fahrzeugs, wobei einigen Radpositionen des Fahrzeugs ABS-Sensoren zugeordnet sind und anderen Radpositionen des Fahrzeugs keine ABS-Sensoren zugeordnet sind. Ein Verfahren mit den im Oberbegriff des Anspruchs 1 angegebenen Merkmalen ist aus WO 2015/055424 A1 bekannt.

Ein zu hoher oder zu niedriger Reifendruck beeinträchtigt die Fahrzeugsicherheit, führt zu erhöhtem Kraftstoffverbrauch und verstärkter Reifenabnutzung. Fahrzeuge werden deshalb mit Reifendrucküberwachungssystemen ausgerüstet, die einem Fahrer einen zu hohen oder zu tiefen Reifendruck eines Fahrzeugreifens anzeigen. Derartige Reifendrucküberwachungssysteme enthalten Reifendrucküberwachungseinheiten, die an den einzelnen Fahrzeugrädern montiert werden, einen Drucksensor enthalten, im Betrieb den Reifendruck messen und Druckdaten drahtlos an ein Empfangsgerät senden.

Damit angezeigt werden kann, an welchem Rad ein zu hoher oder zu niedriger Reifendruck vorliegt, müssen die einzelnen Reifendrucküberwachungseinheiten den jeweiligen Fahrzeugrädern zugeordnet werden. Reifendrucküberwachungseinheiten übertragen deshalb ihre Druckdaten in Datentelegrammen zusammen mit einer charakteristischen Kennung, bei der sich üblicherweise um eine Ziffernfolge handelt. Diese charakteristischen Kennungen und damit die Reifendrucküberwachungseinheiten werden bei modernen Reifendrucküberwachungssystemen automatisch einer Reifenposition des Fahrzeugs zugeordnet.

Eine Möglichkeit zur automatischen Zuordnung von Reifendrucküberwachungseinheiten zu den verschiedenen Radpositionen eines Fahrzeugs besteht darin, den Empfangspegel auszuwerten, mit dem die von den einzelnen Reifendrucküberwachungseinheiten ausgesandten Signale von einer oder mehreren am Fahrzeug angeordneten Antennen empfangen werden. Der Empfangspegel nimmt nämlich mit zunehmenden Abstand der Empfangsantenne von der sendenden Reifendrucküberwachungseinheit ab. Die Empfangspegel korrelieren deshalb mit dem Abstand der Antenne von den verschiedenen Radpositionen und ermöglichen so eine eindeutige Zuordnung.

Diese Zuordnung ist relativ einfach, wenn jedem Fahrzeugrad eine Antenne zugeordnet, so dass jede Antenne Signale einer bestimmten Reifendrucküberwachungseinheit mit einem sehr hohen Empfangspegel und die Signale anderer Reifendrucküberwachungseinheiten mit deutlich geringeren Empfangspegeln empfängt. Je weniger Empfangsantennen an einem Fahrzeug vorhanden sind, desto weniger deutlich sind die Unterschiede in den Empfangspegeln der Signale der verschiedenen Reifendrucküberwachungseinheiten. Hinzu kommt, dass die Empfangspegel der Signale durch verschiedene Störfaktoren, insbesondere auch die Raddrehung, beeinflusst werden. Für eine Zuordnung ist deshalb eine mehr oder weniger aufwendige statistische Auswertung erforderlich ist. In der Regel müssen deshalb eine große Zahl von Sendungen empfangen und statistisch ausgewertet werden, damit eine Zuordnung einer Reifendrucküberwachungseinheit zu einer bestimmten Radposition möglich ist.

Die Zuordnung der Reifendrucküberwachungseinheiten eines Reifendrucküberwachungssystems zu bestimmten Radpositionen lässt sich bei Fahrzeugen mit ABS-Sensor vereinfachen, indem Signale der ABS-Sensoren ausgewertet werden. Entsprechende Verfahren sind beispielsweise in der DE 10 2010 037 512 B4, der DE 197 34 323 B4 sowie der EP 0 806 306 B1 beschrieben. ABS-Sensoren werden manchmal auch als Drehzahlsensoren bezeichnet.

Bei Nutzfahrzeugen ist in der Regel nicht für jedes Rad ein ABS-Sensor vorhanden, sondern nur für einen Teil der Räder. Aus der WO 2015/055424 A1 ist es bekannt, in einem solchen Fall zunächst durch Auswertung der Signale von ABS-Sensoren nur den Fahrzeugrädern, denen ABS Sensoren zugeordnet sind, Reifendrucküberwachungseinheiten zuzuordnen. Die übrigen Reifendrucküberwachungseinheiten werden dann den verbleibenden Radpositionen durch Auswertung der Empfangspegel, mit denen die Signale der übrigen Reifendrucküberwachungseinheiten empfangen werden, zugeordnet.

Ständiges Ziel bei der Entwicklung von Reifendrucküberwachungssystemen ist es, bei Fahrtbeginn möglichst schnell eine Zuordnung der Reifendrucküberwachungseinheiten zu den einzelnen Radpositionen des Fahrzeugs zu erzielen und dabei den Hardwareaufwand, insbesondere die Anzahl der Empfangsantennen, möglichst gering zu halten.

Aufgabe der vorliegenden Erfindung ist es, einen Weg aufzuzeigen, wie dieses Ziel bei einem Fahrzeug, das nur für einen Teil seiner Räder ABS-Sensoren hat, noch besser erreicht werden kann.

Diese Aufgabe wird durch ein Verfahren mit den im Anspruch 1 angegebenen Merkmalen sowie durch ein Reifendrucküberwachungssystem gemäß Anspruch 9 gelöst. Vorteilhafte Weiterbildungen der Erfindung sind Gegenstand von Unteransprüchen.

Ein erfindungsgemäßes Reifendrucküberwachungssystem hat mehrere Auswerteeinheiten, nämlich eine Auswerteeinheit, welche die Signale von ABS-Sensoren auswertet, um Reifendrucküberwachungseinheiten jenen Rädern zuzuordnen, für die Daten von ABS-Sensoren vorliegen, und eine zweite Auswerteeinheit, welche zur Zuordnung der übrigen Reifendrucküberwachungseinheiten zu den Rädern, für die keine Daten von ABS-Sensoren vorliegen, die Empfangspegel auswertet, mit denen Sendungen der Reifendrucküberwachungseinheiten empfangen werden. Anstatt in einer einzigen Auswerteeinheit sowohl Daten von ABS-Sensoren also auch Empfangspegel auszuwerten, werden erfindungsgemäß also Daten von ABS-Sensoren in einer ersten Auswerteeinheit und Empfangspegel in einer zweiten Auswerteeinheit ausgewertet, die in einem Abstand von der ersten Auswerteeinheit angeordnet ist.

Obwohl erfindungsgemäß eine zweite Auswerteeinheit benötigt wird, lässt sich so der Hardwareaufwand des Reifendrucküberwachungssystems deutlich reduzieren. Indem nämlich die Auswertung der ABS-Signale von der Auswertung der Empfangspegel getrennt wird, werden statt eines komplexen Auswerteprogramms nun zwei einfachere Auswerteprogramme benötigt. Dementsprechend werden erfindungsgemäß zwei einfachere, weniger leistungsfähige Auswerteeinheiten, etwa zwei Mikroprozessoren mit kleinerem Speicher, statt einer leistungsfähigeren Auswerteeinheit benötigt.

Anstatt in einem Fahrzeug zwei Auswerteeinheiten exklusiv für das Reifendrucküberwachungssystem vorzusehen, kann die Auswertung der Empfangspegel oder auch die Auswertung der ABS-Signale von einer Auswerteeinheit des Fahrzeugs übernommen werden, die im Fahrzeug auch andere Aufgaben übernimmt und auch für andere Systeme zur Verfügung steht. Beispielsweise kann die Auswertung der Empfangspegel von einem Mikroprozessor vorgenommen werden, der in einem Empfänger ohnehin enthalten ist.

Eine vorteilhafte Weiterbildung der Erfindung sieht vor, dass die erste Auswerteeinheit und die zweite Auswerteeinheit über ein Bussystem des Fahrzeugs miteinander kommunizieren.

Eine Zuordnung von Reifendrucküberwachungseinheiten zu einzelnen Radpositionen mittels Daten von ABS-Sensoren kann beispielsweise mit dem in der DE 197 34 323 B4 oder der DE 10 2010 037 512 B4 beschriebenen Verfahren erfolgen, auf die diesbezüglich Bezug genommen wird. Eine einfache Möglichkeit zur Zuordnung von Reifendrucküberwachungseinheiten zu Radpositionen auf der Grundlage von Daten von ABS-Sensoren besteht darin, dass Reifendrucküberwachungseinheiten in Datentelegrammen zusammen mit ihrer charakteristischen Kennung auch die Drehfrequenz übermitteln. Die ABS-Sensoren erfassen die Drehfrequenz des ihnen zugeordneten Rades. Da sich die Drehfrequenzen der verschiedenen Räder eines Fahrzeugs geringfügig unterscheiden, kann somit eine Reifendrucküberwachungseinheit einem Fahrzeugrad zugeordnet werden, indem man überprüft, welche von einer Reifendrucküberwachungseinheit übermittelte Drehfrequenz mit welcher der von einem ABS-Sensor ermittelten Drehfrequenzen übereinstimmt.

Um die Drehfrequenz zu ermitteln, können die Reifendrucküberwachungseinrichtungen mit einem oder mehreren Beschleunigungssensoren versehen sein, beispielsweise mit Sensoren zur Messung der Zentrifugalbeschleunigung oder Bahnbeschleunigung.

Eine Zuordnung von Reifendrucküberwachungseinheiten zu einzelnen Radpositionen mittels der Empfangspegel, mit denen von den Reifendrucküberwachungseinheiten ausgesandte Datentelegramme empfangen werden, beruht auf der Annahme, dass der Empfangspegel bzw. die Empfangsfeldstärke im statistischen Mittel umso größer ist, je näher die Reifendrucküberwachungseinheit an der Empfangsantenne ist. Für diese Zuordnung genügt an sich eine einzige Antenne, mit der die Datentelegramme empfangen werden. Die Zuordnung lässt sich aber umso schneller durchführen, je mehr Antennen vorhanden sind.

Beispielsweise kann die zweite Auswerteeinheit für jede Antenne und für jede charakteristische Kennung, d.h. für jede Reifendrucküberwachungseinheit, erfassen, wie groß der Empfangspegel an der betreffenden Antenne ist. Die zweite Auswerteeinheit kann dabei auch laufend einen Durchschnittswert ermitteln, mit dem Signale der betreffenden Reifendrucküberwachungseinheit von der betreffenden Antenne empfangen werden. Die zweite Auswerteeinheit kann dann zur Zuordnung beispielsweise diese Durchschnittswerte der Größe nach ordnen. Sobald diese Durchschnittswerte hinreichend stabil sind, sich also die Reihenfolge der Durchschnittswerte in einer vorgegebenen Zeitspanne oder beim Hinzukommen einer vorgegeben Anzahl neuer Empfangspegelwerte nicht mehr ändert, kann auf der Grundlage der Reihenfolge der Durchschnittswerte nach der Größe eine Zuordnung der Reifendrucküberwachungseinheiten zu den Radpositionen erfolgen. Dazu wird die charakteristische Kennung, die im Durchschnitt mit dem größten Empfangspegel empfangen wird, der Radposition zugeordnet, die dieser Antenne am nächsten ist, die charakteristische Kennung, die im Durchschnitt mit dem zweitgrößten Empfangspegel empfangen wird, der Radposition zugeordnet, die dieser Antenne am zweitnächsten ist, und so weiter.

Bei einem erfindungsgemäßen Reifendrucküberwachungssystem können die beiden Auswerteeinheiten unabhängig voneinander arbeiten, insbesondere ist es prinzipiell möglich, dass die zweite Auswerteeinheit durch Auswertung der Empfangspegel für alle Räder des Fahrzeugs eine Zuordnung der Reifendrucküberwachungseinheiten vornimmt. Die Zuordnung lässt sich im Regelfall aber beschleunigen, indem die erste Auswerteeinheit ihr Auswertungsergebnis der zweiten Auswerteeinheit mitteilt, sobald dieses vorliegt. Die zweite Auswerteeinheit kann dann das erste Auswertungsergebnis in die bereits begonnene statistische Auswertung einbeziehen. Beispielsweise indem dann nur noch die übrigen Radpositionen, denen durch das Auswertungsergebnis der ersten Auswerteeinheit noch keine Reifendrucküberwachungseinheiten zugeordnet wurden, einer Reifendrucküberwachungseinheit zugeordnet werden.

Indem die erste Auswerteeinheit und die zweite Auswerteeinheit unabhängig voneinander mit der Zuordnung beginnen, lässt sich in vielen Fällen die Zuordnung verkürzen. Beispielsweise kann die Zeitdauer, die von der ersten Auswerteeinheit benötigt wird, um Reifendrucküberwachungseinheiten jenen Rädern zuzuordnen, denen ABS Sensoren zugeordnet sind, von den konkreten Fahrtbedingungen abhängen, insbesondere davon, ob eine kurvenreiche Strecke gefahren wird oder nicht. In dieser Zeit kann die zweite Auswerteeinheit bereits Daten für eine statistische Auswertung der Zuordnung auf der Grundlage der Empfangspegel sammeln und diese auswerten.

Nutzfahrzeuge haben oft Zwillingsräder. Bei Zwillingsrädern kann eine Zuordnung einer Reifendrucküberwachungseinheit zu dem inneren Rad oder äußeren Rad des Zwillings auf der Grundlage der Empfangspegel schwierig sein, da die Abstände zwischen den beiden Zwillingsrädern nur klein sind. Eine vorteilhafte Weiterbildung der vorliegenden Erfindung sieht deshalb vor, dass die zweite Auswerteeinheit auf der Grundlage der Empfangspegel Reifendrucküberwachungseinheiten zunächst nur dem Zwillingsrad zuordnet, aber noch keine Entscheidung trifft, welche der beiden Reifendrucküberwachungseinheiten dem inneren bzw. dem äußeren Rad eines Zwillingsrades zuzuordnen ist. Diese Entscheidung kann vorteilhaft in einem zweiten Schritt anhand der Drehrichtung vorgenommen werden. Innere und äußere Räder eines Zwillingsrades sind nämlich entgegengesetzt orientiert. Wenn die Reifendrucküberwachungseinheiten stets mit gleicher Orientierung an einem Rad montiert sind, detektieren die Beschleunigungssensoren der Reifendrucküberwachungseinheiten eines Zwillingsrades deshalb verschiedene Drehrichtungen, z.B. eine Linksdrehung des inneren Rades und eine Rechtsdrehung des äußeren Rades oder umgekehrt.

Entsprechende Daten eines Beschleunigungssensors, welche die Drehrichtung angeben oder aus denen sich die Drehrichtung ermitteln lässt, können zur Unterscheidung von inneren und äußeren Rädern eines Zwillingsrades verwendet werden. Diese Entscheidung kann ebenfalls von der zweiten Auswerteeinheit vorgenommen werden. Eine vorteilhafte Weiterbildung der Erfindung sieht jedoch vor, dass die Unterscheidung zwischen inneren und äußeren Rädern eines Zwillingsrades und somit auch die Zuordnung einer Reifendrucküberwachungseinheit zu einem inneren bzw. äußeren Rad eines Zwillingsrades von der ersten Auswerteeinheit vorgenommen werden. Für die Auswertung der Empfangspegel braucht die zweite Auswerteeinheit nämlich Inhalt der Datentelegramme abgesehen von der charakteristischen Kennung nicht berücksichtigen. Die Programme der Auswerteeinheiten lassen sich deshalb vereinfachen, indem die zweite Auswerteeinheit eine Reifendrucküberwachungseinheit nur einem Zwillingsrad zuordnet und offenlässt, ob die Reifendrucküberwachungseinheit dem inneren oder dem äußeren Rad des Zwillingsrads zuzuordnen ist. Diese Unterscheidung wird dann von der ersten Auswerteeinheit anhand der in den Datentelegrammen enthaltenen Daten der Beschleunigungssensoren der Reifendrucküberwachungseinheit vorgenommen. Die erste Auswerteeinheit muss nämlich ohnehin den Inhalt der Datentelegramme auswerten, um eine Zuordnung auf der Grundlage der Daten von ABS-Sensoren vornehmen zu können, etwa die Drehzahl eines Rades aus Beschleunigungsdaten eines Sensors einer Reifendrucküberwachungseinheit zu ermitteln.

Eine weitere vorteilhafte Weiterbildung der Erfindung sieht vor, dass die zweite Auswerteeinheit ihr Auswertungsergebnis der ersten Auswerteeinheit mitteilt und die erste Auswerteeinheit dann eine Unterscheidung zwischen inneren und äußeren Zwillingsrädern vornimmt.

Da die erste Auswerteeinheit den Inhalt der von den Reifendrucküberwachungseinheiten gesendeten Datentelegramme lesen und auswerten muss, um ihre Zuordnung auf der Grundlage der Daten von ABS-Sensoren vornehmen zu können, ist es vorteilhaft, wenn die erste Auswerteeinheit auch die in den Datentelegrammen enthaltenen Druckdaten auswertet, also die eigentliche Drucküberwachung vornimmt. Bei einem Ausführungsbeispiel der Erfindung kann also die erste Auswerteeinheit einen zu niedrigen oder zu hohen Reifendruck oder eine rasche Druckänderung erkennen und veranlassen, dass dies einem Fahrer des Fahrzeugs angezeigt wird.

Weitere Einzelheiten und Vorteile der Erfindung werden an Ausführungsbeispielen unter Bezugnahme auf die beigefügten Figuren erläutert. Gleiche und einander entsprechende Komponenten sind in den Figuren mit übereinstimmenden Bezugszeichen gekennzeichnet. Es zeigen:
- Fig. 1: eine schematische Darstellung eines Nutzfahrzeugs mit einem Ausführungsbeispiel eines erfindungsgemäßen Reifendrucküberwachungssystems; und
- Fig. 2: eine schematische Darstellung eines Nutzfahrzeugs mit einem weiteren Ausführungsbeispiel eines erfindungsgemäßen Reifendrucküberwachungssystems.

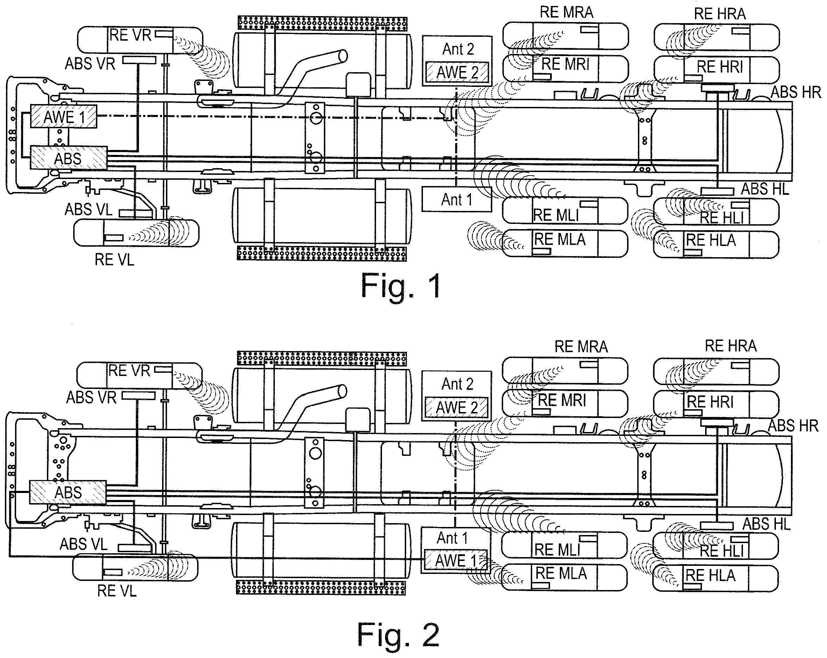

In Figur 1 ist schematisch ein Nutzfahrzeug dargestellt, das zwei Vorderräder, vier mittlere Räder und vier hintere Räder aufweist, wobei die mittleren Räder und die hinteren Räder jeweils zu zwei Zwillingsrädern zusammengefasst sind. Einigen Fahrzeugrädern sind ABS-Sensoren zugeordnet, anderen Fahrzeugrädern sind dagegen keine ABS-Sensoren zugeordnet. Bei dem zeigten Beispiel sind nur den Vorderrädern ABS-Sensoren ABS VL, ABS VR und den inneren Hinterrädern ABS-Sensoren ABS HL, ABS HR zugeordnet. Für die mittleren Räder hat das dargestellte Fahrzeug keine ABS Sensoren.

Die beiden Vorderräder sind mit Reifendrucküberwachungseinheiten RE VL, RE VR ausgerüstet. Die mittleren Räder mit Reifendrucküberwachungseinheiten RE MLA, RE MLI, RE MRE und RE MRA. Die hinteren Räder sind mit Reifendrucküberwachungseinheiten RE HLA, RE HLI, RE HRE und RE HRA ausgerüstet. Die Reifendrucküberwachungseinheiten enthalten jeweils einen Sender, einen Drucksensor, einen oder mehrere Beschleunigungssensoren sowie einen Temperatursensor. Im Betrieb senden die Reifendrucküberwachungseinheiten Datentelegramme, die eine charakteristische Kennung der Reifendrucküberwachungseinheit sowie Druck- und Temperaturdaten und mittels der Beschleunigungssensoren gewonnene Informationen enthalten. Zum Empfang dieser Datentelegramme ist das Nutzfahrzeug mit zwei Antennen Ant 1, Ant 2 ausgerüstet.

Bei jedem Fahrtbeginn werden die charakteristischen Kennungen der Reifendrucküberwachungseinheiten den verschieden Radpositionen zugeordnet, d.h. es wird ermittelt, welche Reifendrucküberwachungseinheit sich an welcher Radposition befindet. Dazu werden von einer ersten Auswerteeinheit AWE 1 die Signale der ABS-Sensoren ABS VL, ABS VR, ABS HL, ABS HR sowie mit den Datentelegrammen übermittelten Informationen über die Reifendrehung ausgewertet. Wegen unterschiedlichem Reifendurchmesser, etwa als Folge von unterschiedlichem Fülldruck oder unterschiedlicher Last, oder wegen Kurvenfahrt unterscheiden sich die Drehzahlen der verschiedenen Reifen eines Fahrzeugs geringfügig. Die erste Auswerteeinheit AWE 1 kann deshalb die Reifendrucküberwachungseinheiten anhand von Daten der ABS-Sensoren zuordnen, etwa indem die erste Auswerteeinheit AWE 1 überprüft, für welche Reifendrucküberwachungseinheiten die anhand der Datentelegramme ermittelten Drehzahlen mit den aus Daten von ABS-Sensoren ermittelten Drehzahlen übereinstimmen. Im Rahmen dieser Zuordnung kann die erste Auswerteeinheit AWE 1 zusätzlich auch anhand von Daten eines Beschleunigungssensors der Reifendrucküberwachungseinheiten die Drehrichtung eines Rades ermitteln und so Reifendrucküberwachungseinheiten an linken Rädern von Reifendrucküberwachungseinrichtungen an rechten Rädern zu unterscheiden. Die erste Auswerteeinheit 1 ordnet somit den Rädern, für die ABS-Sensoren Daten liefern, Reifendrucküberwachungseinheiten zu.

Für die übrigen Reifendrucküberwachungseinheiten wird die Radposition durch Auswertung der Empfangspegel ermittelt, mit denen Datentelegramme der betreffenden Reifendrucküberwachungseinheiten empfangen werden. Wie Figur 1 zeigt, sind die Abstände der verschiedenen Räder von den Antennen Ant 1, Ant 2 jeweils unterschiedlich. Da die Empfangspegel, mit denen Datentelegramme der Reifendrucküberwachungseinheiten von den Antennen Ant 1, Ant 2 empfangen werden, mit zunehmendem Abstand abnehmen, lässt sich durch eine statistische Auswertung der Empfangspegel ermitteln, welche Radposition welcher charakteristischen Kennung und somit welcher Reifendrucküberwachungseinheit zuzuordnen ist. Da die Empfangspegel von verschiedenen Störeinflüssen beeinträchtigt werden, ist für die Zuordnung eine statistische Auswertung erforderlich, die von der zweiten Auswerteeinheit AWE 2 vorgenommen wird.

Die beiden Auswerteeinheiten AWE 1 und AWE 2 kommunizieren miteinander, beispielsweise über einen Datenbus, etwa einen CAN Bus. Die erste Auswerteeinheit AWE 1 teilt ihr Auswertungsergebnis der zweiten Auswerteeinheit AWE 2 mit. Die zweite Auswerteeinheit AWE 2 kann dann dieses Auswerteergebnis in eine laufende Auswertung einbeziehen, beispielsweise indem nun nur noch charakteristische Kennungen und Radpositionen berücksichtigt werden, für die von der ersten Auswerteeinheit AWE 1 noch keine Zuordnung vorgenommen wurde.

Die zweite Auswerteeinheit AWE 2 kann an sich eine vollständige Zuordnung aller Reifendrucküberwachungseinheiten zu allen Radpositionen vornehmen, bzw. wie vorstehend beschrieben durch Auswertung der Empfangspegel, mit denen Datentelegramme von den Antennen ANT 1, ANT2 empfangen werden, eine vollständige Zuordnung jener Reifendrucküberwachungseinheiten vornehmen, für die keine Zuordnung anhand der Daten der ABS-Sensoren möglich war. Allerdings unterscheiden sich die Abstände der beiden Reifen eines Zwillingsrades zu einer Antenne Ant1 oder Ant2 nur sehr wenig, so dass eine Unterscheidung der beiden Radpositionen eines Zwillingsrades auf der Grundlage der Empfangspegel schwierig ist und erst nach Empfang einer relativ großen Anzahl von Datenprotokollen möglich. Um die für eine Zuordnung benötigte Zeit abzukürzen, kann es vorteilhaft sein, wenn die zweite Auswerteeinheit AWE 2 auf der Grundlage der Empfangspegel nur eine Zuordnung einer Reifendrucküberwachungseinheit zu einem Zwillingrad vornimmt, aber offen lässt, welche Reifendrucküberwachungseinheit zu dem inneren Rad eines Zwillingsrads und welche Reifendrucküberwachungseinheit zu dem äußeren Rad eines Zwillingsrads gehört.

Die Unterscheidung zwischen inneren und äußeren Rädern eines Zwillingsrades kann vorteilhaft anhand der Drehrichtung vorgenommen. Bei gleicher Positionierung der Reifendrucküberwachungseinrichtung relativ zu dem Rad, an dem sie montiert ist, stellen die Beschleunigungssensoren der Reifendrucküberwachungseinrichten des äußeren Rades nämliche die umgekehrte Drehrichtung fest, wie die Beschleunigungssensoren des inneren Rades. Indem mit den Datentelegrammen auch Daten aus Messungen der Beschleunigungssensoren übermittelt werden, lässt sich so die Zuordnung beschleunigen. Die Drehrichtung einer Reifendrucküberwachungseinrichtung und somit die Unterscheidung eines inneren Zwillingsrades von einem äußeren Zwillingsrad kann von der ersten oder der zweiten Auswerteeinheit vorgenommen werden. Bei dem dargestellten Ausführungsbeispiel wird diese Unterscheidung von der ersten Auswerteeinheit AWE 1 vorgenommen. Vorteilhaft muss die zweite Auswerteeinheit den Inhalt der Datenprotokolle dann, abgesehen von der charakteristischen Kennung, nicht zur Kenntnis nehmen, so dass sich die Software für die zweite Auswerteeinheit sehr einfach halten und folglich ein einfacher Mikroprozessor als zweite Auswerteeinheit genügt. Die zweite Auswerteeinheit AWE 2 meldet ihr Auswertungsergebnis deshalb an die erste Auswertungseinheit AWE 1, die dann die Zuordnung der Reifendrucküberwachungseinheiten zu den Radpositionen vervollständigt.

Bei dem in Fig.1 gezeigten Auswertungsbeispiel ist die erste Auswerteeinheit AWE 1 eine separate Auswerteeinheit und die zweite Auswerteeinheit AWE 2 in den Empfänger einer der Antenne integriert. Bei dem in Fig. 2 gezeigten Ausführungsbeispiel sind beide Auswerteeinheiten in Empfänger der Antennen integriert, nämlich die erste Auswerteeinheit AWE 1 in den Empfänger der ersten Antenne ANT 1 und die zweite Auswerteeinheit AWE 2 in den Empfänger der zweiten Antenne ANT 2. Als erste bzw. zweite Auswerteeinheiten können aber auch irgendwelche anderen Steuereinheiten eines Fahrzeugs verwendet werden, die ohnehin vorhanden sind.

## Patentansprüche

1. Verfahren zum Zuordnen von an Rädern eines Fahrzeugs montierten Reifendrucküberwachungseinheiten (RE) zu Radpositionen des Fahrzeugs, wobei einigen Radpositionen des Fahrzeugs ABS-Sensoren (ABS) zugeordnet sind und anderen Radpositionen des Fahrzeugs keine ABS-Sensoren zugeordnet sind, mit den folgenden Schritten:
- Zuordnen von Reifendrucküberwachungseinheiten zu den Radpositionen, denen ABS-Sensoren zugeordnet sind, durch Auswertung von Signalen der ABS-Sensoren, und
- Zuordnen der übrigen Reifendrucküberwachungseinheiten zu den Radpositionen, denen keine ABS-Sensoren zugeordnet sind, durch Auswertung von Empfangspegeln, mit denen von den Reifendrucküberwachungseinheiten gesendete Signale empfangen werden,
wobei die Auswertung der Signale von ABS-Sensoren von einer ersten Auswerteeinheit (AWE 1) und die Auswertung der Empfangspegel von einer zweiten Auswerteeinheit (AWE 2) durchgeführt werden,
**dadurch gekennzeichnet, dass** die erste Auswerteeinheit (AWE 1) und die zweite Auswerteeinheit (AWE 2) über ein Bussystem mit einander kommunizieren.

2. Verfahren nach Anspruch 1, **dadurch gekennzeichnet, dass** nur eine der beiden Auswerteeinheiten, vorzugsweise die erste Auswerteeinheit, eine Auswertung der von den Reifendrucküberwachungseinheiten gesendeten Daten durchführt.

3. Verfahren nach einem der vorstehenden Ansprüche, **dadurch gekennzeichnet, dass** die erste Auswerteeinheit ihr Auswertungsergebnis der zweiten Auswerteeinheit mitteilt.

4. Verfahren nach Anspruch 3, **dadurch gekennzeichnet, dass** die zweite Auswerteeinheit bereits vor Erhalt des Auswertungsergebnisses der ersten Auswerteeinheit mit einer statistischen Auswertung der Empfangspegel beginnt und das Auswertungsergebnis der zweiten Auswerteeinheit zur Vereinfachung der statistischen Auswertung nutzt.

5. Verfahren nach Anspruch 3 oder 4, **dadurch gekennzeichnet, dass** die zweite Auswerteeinheit das Auswertungsergebnis der ersten Auswerteeinheit berücksichtigt und die zweite Auswerteeinheit ihr Auswertungsergebnis der ersten Auswerteeinheit mitteilt.

6. Verfahren nach einem der vorstehenden Ansprüche, **dadurch gekennzeichnet, dass** die zweite Auswerteeinheit durch Auswertung der Empfangspegel Reifendrucküberwachungseinheiten einem Zwillingsrad zu ordnet, ihr Auswertungsergebnis der ersten Auswerteeinheit mittteilt und dann die erste Auswerteeinheit entscheidet, welche der beiden einem Zwillingsrad zugeordneten Reifendrucküberwachungseinheiten dem inneren Rad des Zwillingsrads und welche der beiden einem Zwillingsrad zugeordneten Reifendrucküberwachungseinheiten dem inneren Rad des Zwillingsrads zugeordnet werden.

7. Verfahren nach Anspruch 6, **dadurch gekennzeichnet, dass** die erste Auswerteeinheit innere von äußeren Rädern eines Zwillingsrades anhand der Drehrichtung des Rades unterscheidet, die mittels in den Reifendrucküberwachungseinrichtungen enthaltenen Beschleunigungssensoren ermittelt wird.

8. Verfahren nach einem der vorstehenden Ansprüche, **dadurch gekennzeichnet, dass** die zweite Auswerteeinheit in einem Empfänger enthalten ist.

9. Reifendrucküberwachungssystem mit
mehreren Reifendrucküberwachungseinheiten (RE), die einen Drucksensor und einen Beschleunigungssensor enthalten und im Betrieb Datentelegramme aussenden, die einen charakteristische Kennung sowie Druckdaten enthalten, einem Empfänger zum Empfangen der Datentelegramme,
einer ersten Auswerteeinheit (AWE 1), die dafür eingerichtet ist, zur Zuordnung der charakteristischen Kennungen zu Radpositionen Signale von ABS-Sensoren (ABS) auszuwerten, und
einer zweiten Auswerteeinheit (AWE 2), die dafür eingerichtet ist, zur Zuordnung der charakteristischen Kennungen zu Radpositionen Empfangspegel auszuwerten, mit denen der Empfänger Datentelegramme der Reifendrucküberwachungseinheiten empfängt,
**dadurch gekennzeichnet, dass** die erste Auswerteeinheit (AWE 1) und die zweite Auswerteeinheit (AWE 2) über ein Bussystem mit einander kommunizieren.

## Claims

1. A method for assigning tyre pressure monitoring units (RE) mounted on wheels of a motor vehicle to wheel positions of the motor vehicle, wherein ABS sensors (ABS) are assigned to some wheel positions of the motor vehicle, and no ABS sensors are assigned to other wheel positions of the motor vehicle, including the following steps:
- assigning tyre pressure monitoring units to the wheel positions to which ABS sensors have been assigned through evaluation of signals from the ABS sensors, and
- assigning the other tyre pressure monitoring units to the wheel positions to which no ABS sensors have been assigned, through evaluation of reception levels with which signals transmitted by the tyre pressure monitoring units are received,
wherein the evaluation of the signals from ABS sensors is performed by a first evaluation unit (AWE 1) and the evaluation of the reception levels is performed by a second evaluation unit (AWE 2),
**characterized in that** the first evaluation unit (AWE 1) and the second evaluation unit (AWE 2) communicate with each other via a bus system.

2. The method according to Claim 1, **characterized in that** only one of the two evaluation units, preferably the first evaluation unit, performs an evaluation of the data sent by the tyre pressure monitoring units.

3. The method according to either of the preceding claims, **characterized in that** the first evaluation unit communicates the result of its evaluation to the second evaluation unit.

4. The method according to Claim 3, **characterized in that** the second evaluation unit begins with a statistical analysis of the reception levels before receiving the result of the evaluation by the first evaluation unit and uses the result of the evaluation by the second evaluation unit to simplify the statistical analysis.

5. The method according to Claim 3 or 4, **characterized in that** the second evaluation unit takes into account the result of the evaluation by the first evaluation unit, and the second evaluation unit communicates the results of its evaluation to the first evaluation unit.

6. The method according to any one of the preceding claims, **characterized in that** the second evaluation unit assigns tyre pressure monitoring units to a twin wheel through evaluation of the reception levels, communicates the result of its evaluation to the first evaluation unit, and the first evaluation unit then decides which of the two tyre pressure monitoring units assigned to a twin wheel will be assigned to the inner wheel of the twin wheel, and which of the two tyre pressure monitoring units assigned to a twin wheel will be assigned to the inner wheel of the twin wheel.

7. The method according Claim 6, **characterized in that** the first evaluation unit differentiates inner from outer wheels of a twin wheel on the basis of the direction of rotation of the wheel, which is determined by means of acceleration sensors contained in the tyre pressure monitoring units.

8. The method according to any one of the preceding claims, **characterized in that** the second evaluation unit is contained in a receiver.

9. A tyre pressure monitoring system having
a plurality of tyre pressure monitoring units (RE) which contain a pressure sensor and an acceleration sensor, and which during operation transmit data telegrams that include a characteristic identifier and pressure data,
a receiver for receiving the data telegrams,
a first evaluation unit (AWE 1) which is configured to evaluate signals from ABS sensors for assigning the characteristic identifiers to wheel positions, and
a second evaluation unit (AWE 2) which is configured to evaluate reception levels for assigning the characteristic identifiers to wheel positions, with which the receiver receives data telegrams from the tyre pressure monitoring units,
**characterized in that** the first evaluation unit (AWE 1) and the second evaluation unit (AWE 2) communicate with each other via a bus system.

## Revendications

1. Procédé d'attribution d'unités de contrôle de pression de pneumatiques (RE) montées sur les roues d'un véhicule aux positions de roues de véhicule, sachant que des capteurs ABS (ABS) sont attribués à plusieurs positions de roue du véhicule et aucun capteur ABS n'est attribué aux autres positions de roue du véhicule, avec les étapes suivantes :
- attribution d'unités de contrôle de pression de pneumatiques aux positions de roues, auxquelles sont attribués des capteurs ABS par évaluation de signaux des capteurs ABS, et
- attribution d'autres unités de contrôle de pression de pneumatiques aux positions de roues, auxquelles aucun capteur ABS n'est attribué par évaluation des niveaux de réception avec lesquels des signaux envoyés par les unités de contrôle de pression de pneumatiques sont reçus,
sachant que l'évaluation des signaux des capteurs ABS est exécutée par une première unité d'évaluation (AWE 1) et l'évaluation des niveaux de réception est exécutée par une deuxième unité d'évaluation (AWE 2),
**caractérisé en ce que** la première unité d'évaluation (AWE 1) et la deuxième unité d'évaluation (AWE 2) communiquent entre elles via un système de bus.

2. Procédé selon la revendication 1, **caractérisé en ce que** seule une des deux unités d'évaluation, de préférence la première unité d'évaluation, exécute une évaluation des données envoyées par les unités de contrôle de pression des pneumatiques.

3. Procédé selon l'une quelconque des revendications précédentes **caractérisé en ce que** la première unité d'évaluation communique son résultat d'évaluation à la deuxième unité d'évaluation.

4. Procédé selon la revendication 3, **caractérisé en ce que** la deuxième unité d'évaluation commence, déjà avant l'obtention du résultat d'évaluation de la première unité d'évaluation, une évaluation statistique des niveaux de réception et utilise le résultat d'évaluation de la deuxième unité d'évaluation pour simplifier l'évaluation statistique.

5. Procédé selon la revendication 3 ou 4, **caractérisé en ce que** la deuxième unité d'évaluation prend en considération le résultat d'évaluation de la première unité d'évaluation et la deuxième unité d'évaluation communique son résultat d'évaluation à la première unité d'évaluation.

6. Procédé selon l'une quelconque des revendications précédentes, **caractérisé en ce que** la deuxième unité d'évaluation attribue à des roues jumelées des unités de contrôle de pression de pneumatiques par évaluation des niveaux de réception, communique son résultat d'évaluation à la première unité d'évaluation et la première unité d'évaluation décide ensuite laquelle des deux unités de contrôle de pression de pneumatiques attribuées à des roues jumelées est attribuée à la roue intérieure des roues jumelées et laquelle des deux unités de contrôle de pression de pneumatiques attribuées à des roues jumelées est attribuée à la roue intérieure des roues jumelées.

7. Procédé selon la revendication 6, **caractérisé en ce que** la première unité d'évaluation distingue entre les roues intérieures et les roues extérieures de roues jumelées à l'aide du sens de rotation de la roue, qui est déterminé au moyen des capteurs d'accélération contenus dans les dispositifs de contrôle de pression de pneumatiques.

8. Procédé selon l'une quelconque des revendications précédentes, **caractérisé en ce que** la deuxième unité d'évaluation est contenue dans un récepteur.

9. Système de contrôle de pression de pneumatiques avec
plusieurs unités de contrôle de pression de pneumatiques (RE), qui contiennent un capteur de pression et un capteur d'accélération et émettent en fonctionnement des télégrammes de données, qui contiennent une identification caractéristique ainsi que des données de pression,
un récepteur pour la réception des télégrammes de données,
une première unité d'évaluation (AWE 1), qui est agencée pour évaluer des signaux des capteurs ABS (ABS) pour l'attribution des identifications caractéristiques aux positions de roues, et
une deuxième unité d'évaluation (AWE 2), qui est agencée pour évaluer des niveaux de réception pour l'attribution des identifications caractéristiques aux position de roues, avec lesquels le récepteur reçoit des télégrammes de données des unités de contrôle de pression des pneumatiques,
**caractérisé en ce que** la première unité d'évaluation (AWE 1) et la deuxième unité d'évaluation (AWE 2) communiquent entre elles via un système de bus.
